# EUROPÄISCHE PATENTSCHRIFT

(11) **EP 0 439 817 B1**
(45) Veröffentlichungstag und Bekanntmachung des Hinweises auf die Patenterteilung: **31.07.1996**
(21) Anmeldenummer: 90125315.3
(22) Anmeldetag: 22.12.1990
(51) Int. Cl.: C08L 71/12

(54) **Kontinuierliches Verfahren zur Herstellung von Formmassen auf der Basis von Polyphenylenethern und hochschlagzähem Polystyrol**
Continuous process for the preparation of moulding compositions based on polyphenylene ether and a high impact polystyrene
Procédé de préparation de masses à mouler en continu à base de poly(éthers de phénylène) et de polystyrène à haute résistance au choc

(30) Priorität: 26.01.1990 DE 4002261
(43) Veröffentlichungstag der Anmeldung: 07.08.1991
(73) Patentinhaber: BASF Aktiengesellschaft, 67063 Ludwigshafen (DE)
(72) Erfinder: Ostermayer, Bertram, Dr., W-6900 Heidelberg (DE); Muehlbach, Klaus, Dr., W-6148 Heppenheim (DE); Baumgartner, Ehrenfried, Dr., W-6701 Roedersheim-Gronau (DE)

(56) Entgegenhaltungen:
- EP-A- 0 276 768
- EP-A- 0 351 590
- WO-A-87/05311
- DE-A- 2 504 503
- US-A- 4 077 934

## Beschreibung

Die Erfindung betrifft ein kontinuierliches Verfahren zur Herstellung von thermpolastischen Formmassen auf der Bais von Polyphenylenethern und hochschlagzähem Polystyrol in einem Extruder.

Thermoplastische Massen, die sich zur Herstellung von Formteilen eignen und die schlagzähmodifizierte Styrolpolymerisate und Polyphenylenether enthalten, sind z.B. aus den US-Patentschriften 3 383 435, 4 128 602 sowie 4 128 603 bekannt. Solche Formmassen eignen sich zur Herstellung von Formteilen, die sich im Vergleich zu schlagzäh modifizierten Styrolpolymerisaten, die nicht mit Polyphenylenethern abgemischt sind, durch eine bessere Wärmeformbeständigkeit auszeichnen. Die Materialeigenschaften derartiger Formmassen sind im allgemeinen zufriedenstellend, doch hat es sich gezeigt, daß bei hoher Schlagzähigkeit die Massen ein nicht ausreichendes Fließverhalten und bei gutem Fließverhalten eine nicht befriedigende Schlagzähigkeit haben.

Aus der DE-A 27 50 515 sind Formmassen aus Polyphenylenethern und einem Styrolharz bekannt, die zur Verbesserung der Schlagfestigkeit eine Mischung aus einem hydrierten und einem nichthydrierten Styrol-Butadien-Styrolblockcopolymeren (ABA-Typ) enthalten.

Weiterhin ist aus der DE-A 24 34 848 bekannt, ABA-Blockcopolymerisate in Polyphenylenethern oder PPE-HIPS-Abmischungen einzusetzen, die nahezu vollständig hydriert sind, wobei mittlere Molekulargewichte sowie die Gewichtsanteile der A- oder B-Blöcke im Copolymeren wesentlich sind.

Aus der DE-A 20 00 118 ist bekannt PPE mit ABA-Blockcopolymerisaten in Mischung einzusetzen, wobei die vorteilhaften Eigenschaften dieser Polymermischung durch ein Herstellungsverfahren in der Flüssigphase erzielt werden.

Zusätzlich sind aus der DE-A 22 58 896 Formmassen bekannt, die sogenannte Interpolymere aus Styrol, Butadien und weiteren Comonomeren zur Vebesserung der Schlagzähigkeit enthalten.

Die Erhöhung der Schlagzähigkeit durch Veränderungen der Blockkautschuke wirken sich bei diesen Formmassen nachteilig auf die Wärmeformbeständigkeit aus.

Aus der DE-A 22 11 005 ist der Zusatz von kautschukmodifiziertem Polystyrol bekannt, welches einen hohen Gewichtsanteil einer elastomeren Gelphase aufweist.

Die Steifigkeit der Formkörper aus diesen Formmassen ist durch den hohen Kautschukanteil jedoch weitestgehend unbefriedigend.

Die Herstellung der bekannten Formmassen erfolgt im allgemeinen durch Mischen der Komponenten in üblichen Mischvorrichtungen wie z.B. Knetern, Ein- oder Zweischneckenextrudern, wobei die Komponenten zur Konfektionierung zweimal oder mehrere Male aufgeschmolzen werden müssen. Diese Verfahrensweise führt zu einer thermischen Schädigung, insbesondere bei der HIPS-Komponente, wobei sich insgesamt die mechanischen Eigenschaften der Formkörper aus diesen Formmassen verschlechtern.

Aus der EP-A 276 768 ist ein Verfahren zur Herstellung von Formmassen aus Polyphenylenethern und Polyamiden in einem Extruder mit mehreren Zonen bekannt.

Dieses Verfahren ist auf eine verbesserte Verträglichkeit der beiden Polymeren abgestellt, wobei gleichzeitige Modifizierung des Polyphenylenethers und Einarbeitung des Polyamids die wesentlichen Verfahrenselemente darstellen.

Aufgrund der unterschiedlichen Polymermatrices ist dieses Herstellungsverfahren nicht auf PPE/HIPS-Mischungen übertragbar.

Der Erfindung lag daher die Aufgabe zugrunde, die geschilderten Nachteile zu beheben und ein Herstellverfahren zur Verfügung zu stellen, welches eine verminderte thermische Schädigung der Polymeren zuläßt und somit zu verbesserten mechanischen Eigenschaften der Formkörper aus diesen Formmassen führt.

Diese Aufgabe wird erfindungsgemäß durch ein Verfahren gemäß Anspruch 1 gelöst.

Das Verfahren kann vorzugsweise auf Ein- oder Zweischneckenextrudern durchgeführt werden. Diese sind vorzugsweise aus einzelnen Gehäusen zusammengesetzt, die temperierbare Mäntel aufweisen. Die Gestaltung der Schnecken unterliegt keiner Beschränkung, es können Förderelemente (mit oder ohne Schubkanten), Knetelemente und/oder Mischelemente vorhanden sein. Darüber hinaus ist es möglich und häufig vorteilhaft teilweise, d.h. abschnittsweise stauende oder rückfördernde Elemente im Extruder zu verwenden, um Verweilzeit und Mischungseigenschaften zu beeinflussen und zu steuern.

Wegen der selbstreinigenden Eigenschaften und der besseren Einstellbarkeit des Verweilzeitspektrums werden besonders bevorzugt Zweischneckenextruder mit gleichlaufenden Schnecken eingesetzt. Der Extruder ist in mindestens zwei, vorzugsweise drei und ggf. auch in mehr Zonen unterteilt.

Nach dem erfindungsgemäßen Verfahren wird zunächst in einer ersten Zone des Extruders durch Umsetzung von
A) 10 - 90 Gew.% eines Polyphenylenethers,
B) 0 - 45 Gew.% eines vinylaromatischen Polymeren und
C) 0 - 60 Gew.% Zusatzstoffe und Verarbeitungshilfsmittel
wobei sich die Agaben in Gewichtsprozent auf das Gesamtgewicht der Komponenten A) bis E) beziehen, bei Temperaturen von 240 bis 350°C, vorzugsweise von 260 bis 330°C und Reaktionszeiten (mittlere Verweilzeiten im Extruder) von 0,1 bis 15 min, vorzugsweise 0,1 bis 10 min und insbesondere 0,5 bis 3 min eine homogene Polymerschmelze hergestellt.

Die erste Zone des Extruders, in der der Polyphenylenether erhitzt wird, weist vorzugsweise eine Länge von 3,5 bis 30, bevorzugt 10 bis 25 D (D = Durchmesser der Schnecke) auf.

In der Nähe der Dosieröffnung in der ersten Zone sind an der Schnecke bevorzugt Förderelemente angebracht, im weiteren Verlauf können sich auch Knetelemente befinden. Am Ende der ersten Zone ist besonders bevorzugt mindestens ein rückförderndens Element vorhanden, mit dem die Verweilzeit in der ersten Zone beeinflußt werden kann.

Bei der Komponente A) handelt es sich um an sich bekannte Polyphenylenether, die beispielsweise durch oxidative Kupplung aus in o-Position disubstituierten Phenolen hergestellt werden können. Vorzugsweise werden solche Polyphenylenether eingesetzt, die mit vinylaromatischen Polymeren verträglich, d.h. ganz oder weitgehend in diesen Polymeren löslich sind (vgl. A. Noshay, Block Copolymers, S. 8 bis 10, Academic Press, 1977 und O. Olabisi, Polymer-Polymer Miscibility, 1979, S. 117 bis 189).

Der Anteil der Komponente A), bezogen auf die Summe der Komponenten A) bis E) beträgt 10 bis 90, vorzugsweise 20 bis 80 und insbesondere 25 bis 75 Gew.%.

Die eingesetzten Polyphenylenether weisen im allgemeinen ein Molekulargewicht (Gewichtsmittelwert) im Bereich von 10.000 bis 80.000, vorzugsweise von 20.000 bis 60.000 auf.

Nur beispielsweise seien hier einige Polyphenylenether aufgeführt, wie sie u.a. in O. Olabisi, l.c., S. 224 bis 230 und 245 genannt werden, wie Poly(2,6-diethyl-1-phenylen)-ether, Poly(2-methyl-6-ethyl-1,4-phenylen)-ether, Poly(2-methyl-6-propyl-1,4-phenylen)ether, Poly-(2,6-dipropyl-1,4-phenylen)ether, Poly(2-ethyl-6-propyl-1,4-phenylen)ether, bevorzugt Poly(2,6-dimethyl-1,4-phenylen)ether oder Copolymere, wie solche, die Einheiten von 2, 3, 6-.Trimethylphenol enthalten, außerdem Polymermischungen. Besonders bevorzugt ist jedoch Poly(2,6-dimethyl-1,4-phenylen)ether.

Die Komponente B), die ggf. beim Erhitzen des Polyphenylenethers zugegeben wird, ist ein vinylaromatisches Polymer, das vorzugsweise mit dem eingesetzten Polyphenylenether verträglich ist.

Das Molekulargewicht dieser Polymeren liegt im allgemeinen im Bereich von 1500 bis 2.000.000, vorzugsweise im Bereich von 70.000 bis 1.000.000.

Beispiele für bevorzugte, mit Polyphenylenethern verträgliche vinylaromatische Polymere sind der bereits erwähnten Monographie von Olabisi, S. 224 bis 230 und 245 zu entnehmen.

Als Komponente B) werden sowohl Styrolhomo- als auch -copolymerisate eingesetzt, die vorzugsweise aus
b₁) 80 - 100 Gew.%, bevorzugt 92 bis 100 Gew.% Styrol oder dessen kern- oder seitenkettensubstituierten Derivaten oder deren Mischungen
b₂) 0 - 20 Gew.%, bevorzugt 0 - 8 Gew.% (Meth)acrylnitril oder (Meth)acrylsäure, Maleinsäure oder Acrylamid oder deren Derivate oder deren Mischungen und
b₃) 0 - 2 Gew.%, bevorzugt 0-1 Gew.% eines Diens
aufgebaut sind.

Als Beispiele für Monomere b₁) seien Chlorstyrol, α-Methylstyrol, Styrol, p-Metyhylstyrol, vinyltoluol und p-tert.-Butylstyrol genannt.

Als monovinylaromatische Verbindungen kommen dabei insbesondere Styrol in Betracht, ferner die kern- oder seitenkettenalkylierten Styrole. Vorzugsweise wird jedoch Styrol allein verwendet.

Die Homopolymerisate werden im allgemeinen nach den bekannten Verfahren in Masse, Lösung oder Suspension hergestellt (vgl. Ullmanns Enzyklopädie der techn. Chemie, Band 19, Seiten 265 bis 272, Verlag Chemie, Weinheim 1980). Die Homopolymerisate können Gewichtsmittel des Molekulargewichts M_{W} von 100 bis 300 000 aufweisen, die nach üblichen Methoden bestimmt werden können.

Als Comonomere zur Herstellung von Copolymerisaten kommen z.B. (Meth)acrylsäure, (Meth)acrylsäurealkylester mit 1 bis 4 C-Atomen im Alkylrest, Acrylnitril und Maleinsäureanhydrid sowie Maleinsäureimide, Acrylamid und Methacrylamide sowie deren N,N oder N-alkylsubstituierten Derivate mit 1 - 10 C-Atomen im Alkylrest in Frage.

Die Comonomeren sind je nach ihrer chemischen Struktur in unterschiedlichen Mengen in den Styrolpolymerisaten enthalten. Entscheidend für den Gehalt an Comonomeren im Mischpolymerisat ist die Mischbarkeit des Copolymerisates mit dem Polyphenylenether. Solche Mischungsgrenzen sind bekannt und beispielsweise in der US-P 4 360 618, 4 405 753 und in der Veröffentlichung von J.R. Fried, G.A. Hanna, Polymer Eng. Scie. Band 22 (1982) Seite 705 ff beschrieben. Die Herstellung der Copolymeren erfolgt nach bekannten Verfahren, die beispielsweise in Ullmanns Enzyklopädie der techn. Chemie, Band 19, Seite 273 ff, Verlag Chemie, Weinheim (1980) beschrieben sind. Die Copolymerisate haben im allgemeinen Gewichtsmittel des Molekulargewichtes (M_{W}) von 10 000 bis 300 000, die nach üblichen Methoden bestimmt werden können.

Als weitere Dienmonomere b₃) kommen z.B. Butadien und Isopren in Betracht. Bevorzugt enthalten die vinylaromatischen Polymeren B) keine Komponente b₃).

Die Komponente B) unterscheidet sich von der Komponente D) darin, daß B) nicht schlagzähmodifiziert ist, d.h., daß der Weichkomponentenanteil (Dienmonomere b₃) 2 Gew.-% nicht überschreitet.

Als Komponente C) können die erfindungsgemäßen thermoplastischen Formmassen auch übliche Zusatzstoffe und Verarbeitungshilfsmittel enthalten. Der Anteil dieser Zusätze beträgt im allgemeinen nicht mehr als 60, insbesondere nicht mehr als 40 Gew.%, bezogen auf das Gesamtgewicht der Komponente A) bis E).

Als Zusatzstoffe seien genannt Hitze- und Lichtstabilisatoren, Gleit- und Entformungsmittel, Färbemittel, wie Farbstoffe und Pigmente in üblichen Mengen. Weitere Zusatzstoffe sind Verstärkungsmittel wie Glasfasern, Asbestfasern, Kohlenstoff-Fasern, aromatische Polyamidfasern und/oder Füllstoffe, Gipsfasern, synthetische Calciumsilikate, Kaolin, calciniertes Kaolin, Wollastonit, Talkum, Kreide, ferner Flammschutzmittel, wie Phosphorverbindungen, wie Phosphat, Phosphorsäureester, Phosphorigsäureester, Phosphinsäureester, Phosphorigsäureester oder organische Phosphinoxide, Halogenverbindungen, ggf. in Kombination mit Synergisten wie Antimontrioxid.

Auch niedermolekulare oder hochmolekulare Polymere kommen als Zusatzstoffe in Betracht.

Über Art und Menge dieser Zusatzstoffe lassen sich die gewünschten Eigenschaften der Endprodukte in weitem Maße steuern.

Es ist deshalb vorteilhaft, insbesondere bei faserförmigen Verstärkungsstoffen, diese in der 1. Zone mit dem PPE zu einer homogenen Polymerschmelze zu verarbeiten.

Zu der Polymerschmelze aus der Komponente A sowie gegebenenfalls B) und C) werden in mindestens einer weiteren Zone eine Schmelze aus
- D) 90 - 10 Gew.-%: eines hochschlagzähmodifizierten Polystyrols, welches einen Weichkomponentenanteil von 8 - 13 Gew.-%, bezogen auf Komponente D) aufweist und
- E) 0 - 45 Gew.-%: eines vinylaromatischen Polymeren
gemeinsam oder über mehrere Einspeiseöffnungen in verschiedenen Zonen zugegeben.

Bevorzugt erfolgt die Dosierung mit einem Seitenextruder mit temperierbarem Mantel, in den die Komponenten D und E eindosiert, aufgeschmolzen und dem Anfang der zweiten Zone des Extruders zugeführt werden.

Im allgemeinen ist der Schneckendurchmesser des Seitenextruders geringer als der des Hauptextruders und die Schneckenlänge liegt im Bereich von 5 bis 40 D, vorzugsweise von 10 bis 20 D. Die Temperatur bei der Dosierung in den Hauptextruder liegt im Bereich von 220 bis 350°C, vorzugsweise von 240 bis 320°C. Die Schnecke des Seitenextruders kann so gestaltet sein, daß die Komponenten vor der Dosierung in den Hauptextruder bereits vorgemischt sind. Die Komponenten werden im Seitenextruder aufgeschmolzen.

Die Zone des Hauptextruders, in denen dann die Polymerschmelze aus der Komponente A) und gegebenenfalls B und C mit den aus dem Beginn der zweiten Zone zudosierten Komponenten abgemischt wird, hat im allgemeinen eine Länge von 5 bis 40 D, vorzugsweise von 10 bis 20 D. Die Temperatur liegt im gleichen Bereich wie bei der Zudosierung der Komponenten D) und E). Die mittleren Verweilzeiten in dieser Zone betragen im allgemeinen 0,1 bis 5, vorzugsweise 0,5 bis 3 min.

In manchen Fällen ist es vorteilhaft, nicht die gesamte Menge der Komponente D) gleichzeitig dem Hauptextruder zuzuführen. In diesem Fall können sich an die zweite Zone des Hauptextruders noch eine oder mehrere gleich aufgebaute Zonen anschließen, in die über Einspeiseöffnungen die Komponenten D und E zugegeben werden können. Auch in diesen Fällen erfolgt die Dosierung in den Hauptextruder über Seitenextruder, deren Aufbau der vorstehend beschriebenen Form entspricht, oder bei Füllstoffen, wie Glasfasern über eine oberseitige Öffnung. Es können auch noch Substanzen zugepumpt werden.

Aufbau und Abmessungen der weiteren Zonen des Hauptextruders, in die Komponenten eingeführt werden, entsprechen den Daten der zweiten Zone.

Nachfolgend werden die Komponenten D) und E), die dem PPE über eine oder mehrere Einspeiseöffnungen zudosiert werden können, beschrieben.

Als Komponente D) werden 10 bis 90 Gew.-%, vorzugsweise von 20 bis 80 Gew.-% und insbesondere 25 bis 75 Gew.-% eines hochschlagzähen Polystyrols (HIPS) zudosiert, dessen Weichkomponentenanteil, bezogen auf D), 8 bis 13 Gew.-%, bevorzugt 9 bis 13 Gew.-% und insbesondere 10 bis 13 Gew.-% beträgt.

Unter Weichkomponente im Sinne dieser Erfindung wird der bei Raumtemperatur (25°C) in Toluol unlösliche Anteil des schlagzäh modifizierten Polymerisats abzüglich etwaiger Pigmente verstanden. Die Weichkomponente entspricht also dem Gelanteil des Produktes.

Die Weichkomponente ist im allgemeinen heterogen aufgebaut, sie bildet sich in der Regel im Laufe des Herstellprozesses aus und wird in der Menge und im Zerteilungsgrad durch die Verfahrensbedingungen beeinflußt. Die zu polymerisierende Lösung des Kautschuks in den monovinylaromatischen Monomeren trennt sich bekanntlich unmittelbar nach Einsetzen der Reaktion in zwei Phasen, von denen die eine, eine Lösung des Kautschuks im monomeren Vinylaromaten, zunächst die kohärente Phase bildet, während die zweite, eine Lösung des Polyvinylaromaten in seinem eigenen Monomeren, in ihr in Tröpfchen suspendiert bleibt. Mit steigendem Umsatz vermehrt sich die Menge der zweiten Phase auf Kosten der ersten und unter Verbrauch der Monomeren; dabei tritt ein Wechsel der Phasenkohärenz auf. Bei diesem bilden sich Tropfen von Kautschuklösung in Polyvinylaromatlösung aus; diese Tropfen halten aber ihrerseits kleinere Tropfen der jetzt äußeren Phase eingeschlossen.

Neben diesem Vorgang läuft eine Pfropfreaktion ab, bei der chemische verknüpfungen zwischen den Kautschukmolekülen und den Polyvinylaromaten unter Bildung von Pfropf-Copolymeren aus beiden Bestandteilen gebildet werden. Dieser Vorgang ist bekannt und z.B. bei Fischer, Die angew. Makrom. Chem. 33 (1973), S. 35 bis 74, ausführlich dargestellt.

Sowohl der aufgepfropfte als auch der mechanisch eingeschlossene Anteil des Polyvinylaromaten in den Kautschukteilchen ist zur Weichkomponente zu rechnen.

Wenn die Masse ganz durchpolymerisiert ist, ist so eine in eine harte Matrix aus dem Polyvinylaromaten eingelagerte heterogene Weichkomponente entstanden, die aus gepfropften Kautschukteilchen mit Einschlüssen aus Matrixmaterial (Polyvinylaromat) besteht. Je größer die Menge des eingeschlossenen Matrix-Materials ist, um so größer ist bei konstantem Kautschukgehalt die Menge der Weichkomponente.

Diese richtet sich also nicht nur nach der Menge des eingesetzten Kautschuks, sondern auch nach der Prozeßführung besonders vor und während der Phaseninversion. Die Einzelmaßnahmen sind prozeßspezifisch und dem Fachmann bekannt (s. z.B. Freeguard, Brit. Polym. J. 6 (1974) S. 203 bis 228; Wagner, Robeson, Rubber Chem. Techn. 43 (1970), 1129 ff).

Die meist angewandten Verfahren zur Herstellung schlagzähmodifizierter Styrolpolymerisate sind die Polymerisation in Masse oder Lösung in Gegenwart eines Kautschuks, wie es beispielsweise in der US-Patentschrift 2 694 692 beschrieben ist, und Verfahren zur Massesuspensionspolymerisation, wie sie beispielsweise in der US-Patentschrift 2 862 906 beschrieben sind. Selbstverständlich sind auch andere Verfahren anwendbar, sofern die gewünschte Teilchengröße der Kautschukphase eingestellt wird.

Als Kautschuke werden die üblicherweise für die Schlagzähmodifizierung von Styrolpolymerisaten gebräuchlichen natürlichen oder synthetischen Kautschuke eingesetzt. Geeignete Kautschuke im Sinne der Erfindung sind neben Naturkautschuk z.B. Polybutadien, Polyisopren und Mischpolymerisate des Butadiens und/oder Isoprens mit Styrol und anderen Comonomeren, die eine Glastemperatur, bestimmt nach K.H. Illers und H. Breuer, Kolloidzeitschrift 190 (1), 16 - 34 (1963), unter -20°C besitzen. Es können aber auch Acrylatkautschuke, EPDM-, Polybutylen- und Polyoctenamerkautschuke eingesetzt werden.

Gegebenenfalls kann in den weiteren Zonen des Extruders als Komponente E) ein vinylaromatisches Polymer zudosiert werden.

Die Komponente E) kann die gleiche Zusammensetzung wie Komponente B) aufweisen, es können aber auch Mischungen unterschiedlicher vinylaromatischer Homo- oder Copolymerisate eingesetzt werden, z.B. glasklares Polystyrol als Komponente B) und ein Copolymer aus Vinyltoluol und Methylstyrol als Komponente E).

Es kann bei dem erfindungsgemäßen Verfahren von Vorteil sein, die Komponente E) (welche der Komponente B) in der 1. Zone entspricht) erst in einer weiteren Zone des Extruders zuzusetzen. Die Anteile der Komponente E) betragen im allgemeinen bis 45 Gew.%, vorzugsweise bis zu 30 Gew.%.

Nach der Zugabe aller Komponenten und deren Abmischung in den verschiedenen erwähnten Zonen des Hauptextruders kann vorteilhaft in einer weiteren Zone eine Entgasung durchgeführt werden. Geeignete apparative Ausführungsformen solcher Entgasungszonen sind an sich bekannt. Die Länge dieser Zone beträgt vorzugsweise von 3 bis 10 D, die Temperatur liegt im Bereich von 250 bis 300°C. Bevorzugt wird die Entgasung durch Anlegen eines Vakuums unterstützt.

Nach der Entgasung wird die nach dem Verfahren hergestellte Mischung aus dem Extruder ausgetragen und anschließend in an sich bekannter Weise weiterverarbeitet.

Die nach dem erfindungsgemäßen Verfahren erhaltenen Produkte zeichnen sich durch eine hohe Schlagzähigkeit und gute Fließfähigkeit aus.

### Beispiele

Zur Durchführung des Verfahrens wurde ein Zweischneckenextruder mit drei Zonen eingesetzt (Fa. Werner und Pfleiderer). Der Schneckendurchmesser betrug 53 mm. Die Längen der einzelnen Zonen sind als Vielfaches des Schneckendurchmessers (D) angegeben.

Die erste Zone des Extruders war 15 D lang und hatte am Anfang eine Einspeiseöffnung für feste Substanzen A) bis C). Diese Substanzen wurden über Dosierwaagen zugeführt. Unter der Einspeiseöffnung waren die Schneckenelemente förderwirksam ausgestaltet, dieser Zonenteil (3D) wurde gekühlt auf 20°C. Der nächste Zonenteil (3D) wurde auf 240°C erhitzt. Der Rest der ersten Zone (9 D) hatte eine Tempertur von 280°C. Im mittleren Teil der ersten Zone befanden sich Knetelemente auf der Schnecke. Am Ende der Schnecke war ein zurückförderndes Element eingebaut.

Die zweite Zone des Extruders war 15 D lang und hatte am Anfang seitlich eine Einspeiseöffnung. Der Rest der zweiten Zone war außerdem zur Entgasungszone hin geschlossen. Die Komponente D) und E) wurden durch die seitliche Einspeiseöffnung in die zweite Zone mit einem Seitenextruder zugeführt. Die zweite Zone wurde auf 285°C erhitzt. Die Schnecke trug Knetelemente.

Der Seitenextruder war ein Zweischneckenextruder mit einem Schneckendurchmesser von 30 mm und 17 D Länge. Die Temperatur der Extrudermäntel des Seitenextruders betrugen 240°C. Am Anfang des Seitenextruders wurden die Substanzen durch Dosierwaagen zugeführt und am Ende des Seitenextruders in die seitliche Einspeiseöffnung der zweiten Zone zugeführt.

Die Entgasungszone des Extruders war 6 D lang und hatte am Anfang eine Entgasungsöffnung an die ein Vakuum von 100 Torr angelegt wurde. Im zweiten Teil der Entgasungszone wurde ein Druck aufgebaut und das Produkt über eine Lochdüse auszutragen. Das Produkt wurde durch ein Wasserbad gezogen und anschließend granuliert und gerocknet.

Im einzelnen wurden folgende Komponenten eingesetzt:
A1) Poly-(2,6-dimethyl-1,4-phenylen)-ether (mit einer Grenzviskosität von 0,55, gemessen in 1 gew.%iger CHCl₃-Lösung bei 25°C)
A2) Poly-(2,6-dimethyl-1,4-phenylen)-ether (mit einer Grenzviskosität von 0,45, gemessen in 1 gew.-%iger CHCl₃-Lösung bei 25°C)
B1) Polystyrol PS 144 C, Fa. BASF, MFI 200/5,0 = 24 g/10 Min.
B2) Oligomeres Polystyrol mit M_{W} = 5000
B3) Copolymeres aus Vinyltoluol und Methylstyrol (M_{W} = 5000; Picotex 120 der Fa. Hercules)
C1) Trisnonylphenylphosphit
C2) Polyethylenwachs (M_{W} = 5000)
D1) Schlagfestes Polystyrol mit einem Polybutadiengehalt (≙ Weichkomponentenanteil) von 9 Gew.%
D2) Schlagfestes Polystyrol mit einem Polybutadiengehalt von 13 Gew.%
D1*) Schlagfestes Polystyrol mit einem Polybutadiengehalt von 6 Gew.%
D2*) Schlagfestes Polystyrol mit einem Polybutadiengehalt von 14 Gew.%.
   Herstellung Komponente D₁) gemäß DE-A 30 35 648
   In einem 4-l-Rührkessel mit Blattrührer wurde eine Lösung bestehend aus
   - 1283 g: Styrol
   - 112 g: Polybutadien (1,2-Vinylgehalt ca. 9 Gew.%)
   - 1,5 g: t-Dodecylmercaptan
   - 1,5 g: Octadecyl-3(3',5'-di-tert.-butyl-4'-hydroxiphenyl)-propionat
   - 1,5 g: Dicumylperoxid
   bei 110°C Innentemperatur und einer Rührerdrehzahl von 300 Ump bis zu einem Feststoffgehalt von 25,4 Gew.-% vorpolymerisiert. Anschließend wurden 1800 ml Wasser, die 9 g Polyvinylpyrrolidon vom K-Wert 90 und 1,8 g Na₄P₂O₇ enthielten, zugesetzt und die Rührerdrehzahl auf 300 Upm erhöht. Durch Nachpolymerisation von 3 Stunden bei 110°C, 3 Stunden bei 120°C und 4 Stunden bei 140°C wurde bis zu einem Styrolumsatz > 99 % auspolymerisiert.
   Die Herstellung der Komponenten D2), D1*) und D2*) erfolgte analog unter Variation der Polybutadieneinsatzmenge, so daß der Weichkomponentenanteil des schlagzähen Polystyrols entsprechend der gewünschten Menge verändert wurde.
D3*) Styrol-Butadien-Styrol-Blockpolymerisat, hergestellt durch anionische Polymerisation (31 Gew.% Styrol, 69 Gew.% Butadien) mit M_{W} = 95 000 (Cariflex® TR 1101, Fa. Shell)
D4*) Styrol-Butadien(hydriert)-Styrol-Blockkautschuk, hergestellt durch anionische Polymerisation mit anschließender Hydrierung des Polybutadienblocks, mit 30 Gew.% Styrol, 70 Gew.% Butadien (hydriert) mit M_{W} = 65 000 (Kraton® G 1650, Fa. Shell).

### Vergleichsbeispiele

Die Komponente A) bis D) wurden entsprechend der Zusammensetzung in den erfindungsgemäßen Beispielen alle zusammen in die 1. Zone des Hauptextruders dosiert und auf dem Hauptextruder abgemischt.

Die Vergleichsbeispiele mit den Komponenten D1*) und D2*) wurden sowohl nach obiger Arbeitsweise (Beispiele 7*, 9*) als auch nach dem erfindungsgemäßen Verfahren (Beispiele 6*, 8*) durchgeführt.

Die Zusammensetzung der Formmassen sind der Tabelle 1 zu entnehmen.

Die Ergebnisse der Messungen der Kerbschlagzähigkeit (nach DIN 53 453), der Fließfähigkeit bei 21,6 kp Belastung und 250°C (MFI nach DIN 53 735) und der Steifigkeit (Elastizitätsmodul nach DIN 53 457) sind der Tabelle 2 zu entnehmen.

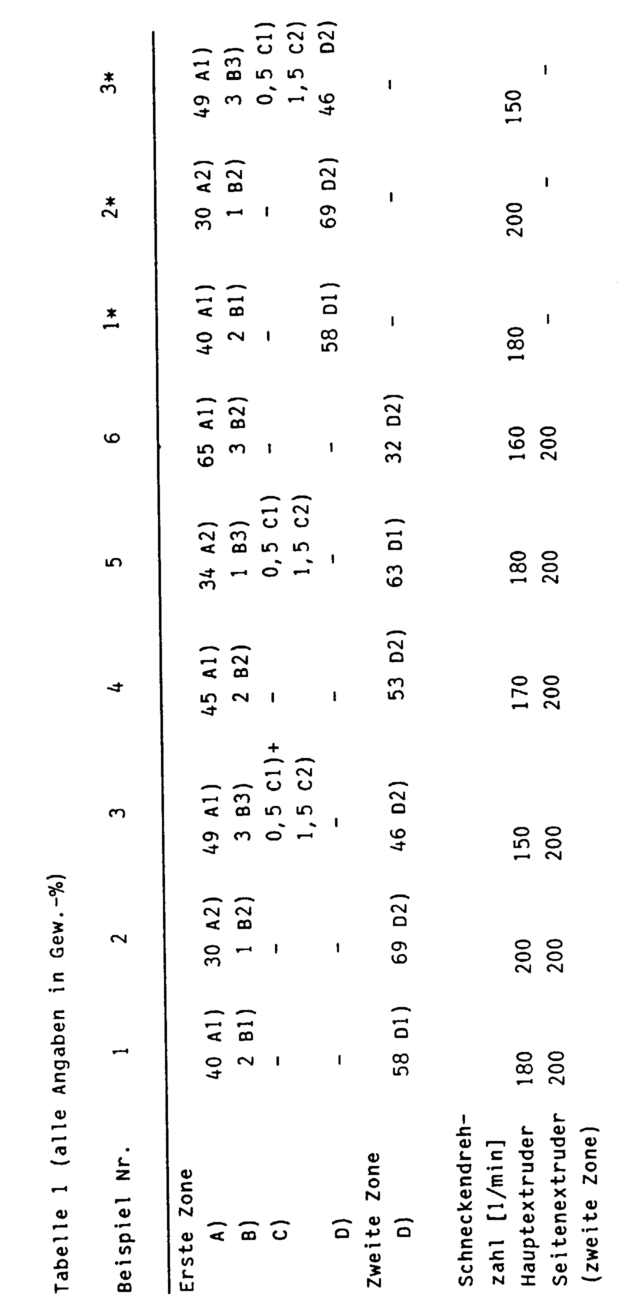

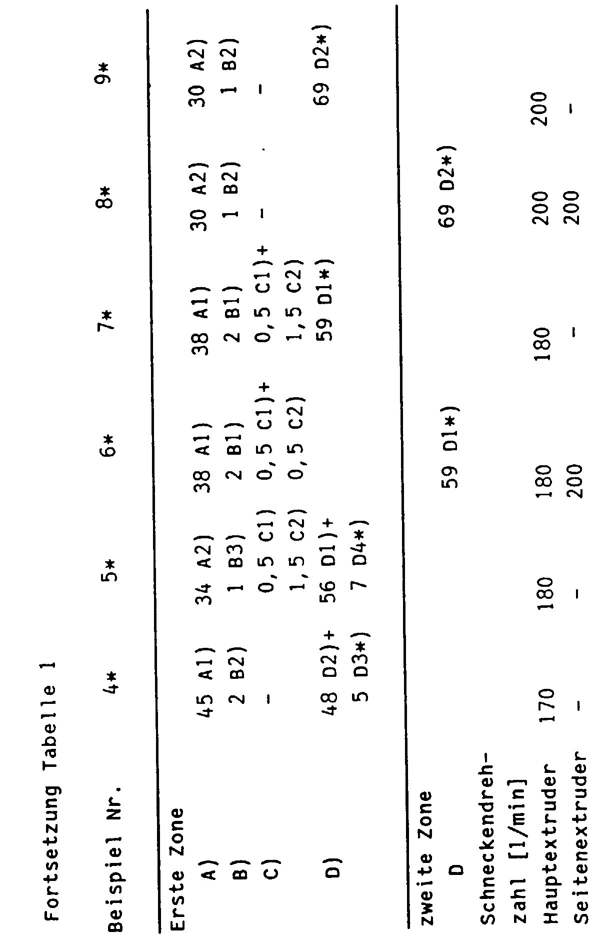

**Tabelle 2**

| | Kerbschlagzähigkeit [kJ/m²] | | | |
|---|---|---|---|---|
| Beispiel Nr. | 23°C | -40°C | Fließfähigkeit [cm³/10'] | Elastizitätsmodul [N/mm²] |
| 1 | 12 | 9,3 | 35 | 2530 |
| 2 | 11 | 9,7 | 43 | 2460 |
| 3 | 15 | 11,2 | 25 | 2600 |
| 4 | 14 | 10,3 | 28 | 2560 |
| 5 | 11 | 8,7 | 53 | 2500 |
| 6 | 16 | 12,4 | 17 | 2650 |
| 1* | 10 | 7,1 | 31 | 2500 |
| 2* | 9 | 6,3 | 39 | 2450 |
| 3* | 12 | 9,1 | 18 | 2500 |
| 4* | 12 | 8,3 | 20 | 2430 |
| 5* | 13 | 7,2 | 45 | 2300 |
| 6* | 10 | 7,3 | 41 | 2580 |
| 7* | 10 | 7,2 | 40 | 2570 |
| 8* | 8 | 6,3 | 31 | 2220 |
| 9* | 8 | 5,3 | 32 | 2230 |

## Patentansprüche

1. Kontinuierliches Verfahren zur Herstellung von thermoplastischen Formmassen auf der Basis von Polyphenylenethern und hochschlagzähem Polystyrol in einem Extruder, dadurch gekennzeichnet, daß man
I) in einer ersten Zone dieses Extruders bei Temperaturen von 240°C bis 350°C
A) 10 - 90 Gew.-% eines Polyphenylenethers,
B) 0 - 40 Gew.% eines vinylaromatischen Polymeren
C) 0 - 60 Gew.-% Zusatzstoffe und Verarbeitungshilfsmittel,
über einen Zeitraum von 0,1 bis 15 min erhitzt, und eine homogene Polymerschmelze herstellt, und dieser Schmelze
II) anschließend in mindestens einer weiteren Zone des Extruders bei 220°C bis 350°Ceine Schmelze aus
D) 10 - 90 Gew.-% eines schlagzähmodifizierten Polystyrols, welches einen Weichkomponentenanteil von 8 - 13 Gew.-%, bezogen auf die Komponente D, aufweist, wobei die Weichkomponente dadurch definiert ist, daß sie bei 25°C in Toluol unlöslich ist, und
E) 0 - 45 Gew.-% eines vinylaromatischen Polymeren,
zusetzt, homogenisiert und die so erhaltene Mischung extrudiert, wobei sich die Angaben in Gewichtsprozent auf die Gesamtmenge der Komponenten A bis E beziehen.

2. Verfahren nach Anspruch 1, dadurch gekennzeichnet, daß man die Mischung der Komponenten A) bis E) in einer weiteren Zone des Extruders entgast.

3. Verfahren nach Anspruch 1, dadurch gekennzeichnet, daß die Komponente B) aus
b₁) 80 - 100 Gew.% Styrol oder dessen kern- oder seitenkettensubstituierten Derivaten oder deren Mischungen,
b₂) 0 - 20 Gew.-% (Meth)acrylnitril oder (Meth)acrylsäure, Maleinsäure, Acrylamid oder deren Derivate oder deren Mischungen und
b₃) 0 - 2 Gew.-% eines Diens
aufgebaut ist.

4. Verfahren nach den Ansprüchen 1 bis 3, dadurch gekennzeichnet, daß die Komponente D) einen Weichkomponentenanteil von 9 - 13 Gew.-% aufweist.

## Claims

1. A continuous process for the production of thermoplastic molding materials based on polyphenylene ethers and high impact polystyrene in an extruder, which comprises
I) heating, in a first zone of this extruder, at from 240°C to 350°C,
A) from 10 to 90% by weight of a polyphenylene ether,
B) from 0 to 40% by weight of a vinyl-aromatic polymer and
C) from 0 to 60% by weight of additives and processing aids,
for from 0.1 to 15 minutes, giving a homogeneous polymer melt, and
II) subsequently adding to this melt, in at least one further zone of the extruder, at from 220°C to 350°C, a melt comprising
D) from 10 to 90% by weight of an impact-modified polystyrene containing from 8 to 13% by weight, based on component D), of a soft component, the soft component being defined as being insoluble in toluene at 25°C, and
E) from 0 to 45% by weight of a vinyl-aromatic polymer,
and homogenizing and extruding the resultant mixture, the data in percent by weight relating to the total amount of components A) to E).

2. A process as claimed in claim 1, wherein the mixture of components A) to E) is degassed in a further zone of the extruder.

3. A process as claimed in claim 1, wherein component B) is built up from
b₁) from 80 to 100% by weight of styrene or a ring- or side chain-substituted derivative thereof, or a mixture thereof,
b₂) from 0 to 20% by weight of (meth)acrylonitrile or (meth)acrylic acid, maleic acid, acrylamide or a derivative thereof, or a mixture thereof, and
b₃) from 0 to 2% by weight of a diene.

4. A process as claimed in any of claims 1 to 3, wherein component D) contains from 9 to 13% by weight of a soft component.

## Revendications

1. Procédé de préparation en continu de masses à mouler thermoplastiques à base de poly(phénylène éthers) et de polystyrène à haute résistance au choc dans une extrudeuse, caractérisé en ce que
I) dans une première zone de cette extrudeuse, on chauffe à une température de 240°C à 350°C, pendant une période de 0,1 à 15 min,
A) 10 à 90% en poids d'un poly(phénylène éther)
B) 0 à 40% en poids d'un polymère vinylaromatique
C) 0 à 60% en poids d'additifs et d'adjuvants de mise en oeuvre,
et on prépare une masse fondue homogène de polymère, et
II) on ajoute ensuite à cette masse fondue, dans au moins une autre zone de l'extrudeuse, à 220-350°C, une masse fondue de
D) 10 à 90% en poids d'un polystyrène modifié dans le sens de la résilience, qui présente une proportion de composant mou de 8 à 13% en poids par rapport au composant D, le composant mou étant défini par le fait qu'il est insoluble dans le toluène à 25°C, et
E) 0 à 45% en poids d'un polymère vinylaromatique, on homogénéise et on extrude le mélange ainsi obtenu, les données en pourcentage en poids se rapportant à la quantité totale des composants A) à E).

2. Procedé selon la revendication 1, caractérisé en ce que l'on dégaze le mélange des composants A) à E) dans une autre zone de l'extrudeuse.

3. Procédé selon la revendication 1, caractérisé en ce que le composant B) se compose de
b₁) 80 a 100% en poids de styrène, de dérivés de celui-ci substitués sur le noyau ou les chaînes latérales ou de mélanges de ceux-ci,
b₂) 0 à 20% en poids de (méth)acrylonitrile ou d'acide (méth)acrylique, d'acide maléique, d'acrylamide, de leurs dérivés ou de leurs mélanges, et
b₃) 0 à 2% en poids d'un diène.

4. Procédé selon l'une quelconque des revendications 1 à 3, caractérisé en ce que le composant D) présente une proportion de composant mou de 9 à 13% en poids.
